# EUROPÄISCHE PATENTSCHRIFT

(11) **EP 3 665 037 B1**
(45) Veröffentlichungstag und Bekanntmachung des Hinweises auf die Patenterteilung: **03.11.2021**
(21) Anmeldenummer: 18753353.4
(22) Anmeldetag: 06.08.2018
(51) Int. Cl.: B60N 2/06

(54) **LÄNGSEINSTELLER UND FAHRZEUGSITZ**
LONGITUDINAL ADJUSTER AND VEHICLE SEAT
DISPOSITIF DE REGLAGE LONGITUDINAL ET SIEGE DE VEHICULE

(30) Priorität: 08.08.2017 DE 102017213782; 17.10.2017 DE 102017218492
(43) Veröffentlichungstag der Anmeldung: 17.06.2020
(73) Patentinhaber: Adient Yanfeng Seating Mechanism Co., Ltd., Shanghai 201315 (CN)
(72) Erfinder: SPRENGER, Erik, 42929 Wermelskirchen (DE)
(74) Vertreter: Liedtke & Partner Patentanwälte
(86) Internationale Anmeldenummer: PCT/EP2018/071241
(87) Internationale Veröffentlichungsnummer: WO 2019/030160

(56) Entgegenhaltungen:
- JP-A- 2001 239 861
- JP-A- 2002 240 600
- JP-A- 2006 335 153
- JP-A- 2008 056 003
- JP-A- 2010 047 090
- US-A1- 2009 243 326

## Beschreibung

Die Erfindung betrifft einen Längseinsteller, insbesondere für einen Fahrzeugsitz, der Längseinsteller aufweisend mindestens ein Schienenpaar, welches aus einer ersten Sitzschiene und einer relativ zur ersten Sitzschiene in Längsrichtung verschiebbaren zweiten Sitzschiene gebildet ist, wobei die Sitzschienen unter Bildung eines Innenkanals einander wechselseitig umgreifen, wobei in dem Innenkanal eine mit der zweiten Sitzschiene gelagerte Spindelmutter und eine mit der Spindelmutter wirkverbundene Spindel angeordnet sind, wobei an einem vorderen Ende der ersten Sitzschiene ein mittels eines Motors antreibbares und mit der Spindel zusammenwirkendes Getriebe angeordnet ist, wobei die Spindel an einem vorderen Endabschnitt der Spindel in dem Getriebe und an einem hinteren Endabschnitt der Spindel in einem Drehlager der ersten Sitzschiene gelagert ist, wobei in Längsrichtung vor der Spindelmutter ein erster Querriegel in einem ersten Schlitz der ersten Sitzschiene aufgenommen ist, wobei die Spindel kontaktfrei durch eine Öffnung des ersten Querriegels hindurchgeführt ist, wobei in Längsrichtung nach vorne beabstandet zum ersten Querriegel ein Absatz der Spindel angeordnet ist, wobei in Reaktion auf eine vorgegebene Krafteinwirkung, beispielsweise im Crashfall der erste Querriegel zwischen der ersten Sitzschiene und dem Absatz verklemmt, und hierdurch eine Kraft von der ersten Sitzschiene über den ersten Querriegel, den Absatz, die Spindel und die Spindelmutter zur zweiten Sitzschiene ableitbar ist. Die Erfindung betrifft ferner einen Fahrzeugsitz.

### Stand der Technik

Aus der DE 10 2005 023 095 A1 ist eine Antriebsvorrichtung für einen Kraftfahrzeugsitz in einer Gleitvorrichtung bekannt. Die Antriebsvorrichtung zur Anwendung mit einer Kraftfahrzeugsitz-Gleitvorrichtung umfasst zusammenpassende feste und bewegliche Schienenteile, die zwischen einer vorderen Stellung und einer hinteren Stellung bewegt werden können. Die Antriebsvorrichtung umfasst eine verlängerte Spindel, eine Spindelmutter, ein Getriebe und eine Einbauvorrichtung. Die Spindel definiert eine Spindelachse und hat ein sich in Längsrichtung erstreckendes Spindelgewinde. Die Spindelmutter kann sicher auf einem ersten Schienenteil befestigt werden und hat ein Innengewinde, das in das Spindelgewinde eingreifen kann. Das Getriebe kann an ein jeweils anderes Schienenteil montiert werden und dreht selektiv die Spindel um die Spindelachse. Die Spindel der Antriebsvorrichtung ist mit einem Spindelrad versehen, das sich in montiertem Zustand der Antriebsvorrichtung durch Spindelradöffnungen des beweglichen Schienenteils nach außen erstreckt.

Aus der US 2009/0243326 A1 ist eine elektrisch betriebene Sitzgleitvorrichtung bekannt, welche eine untere Schiene, die an einem Boden einer Fahrzeugkarosserie befestigt ist, und eine obere Schiene, die gleitbar an der unteren Schiene angeordnet ist, aufweist. Ein Sitz ist mit der oberen Schiene verbunden. Eine Schraubenwelle ist innerhalb der oberen Schiene angeordnet. Eine Mutter ist mit der Schraubenwelle verschraubt und mit der unteren Schiene verbunden. Ein Motor ist auf der Seite der oberen Schiene angeordnet. Ein Getriebe ist an der oberen Schiene befestigt, um eine Drehung des Motors auf die Schraubenwelle zu übertragen. Zusätzlich sind eine erste und eine zweite Platte vorgesehen, um zu ermöglichen, dass eine auf die obere Schiene aufgebrachte Stoßlast direkt auf die Schraubenwelle übertragen wird, um zu verhindern, dass die Stoßlast durch ein Getriebegehäuse auf die Schraubenwelle übertragen wird, sowie um einen Bewegungsbereich der Mutter entlang der Schraubenwelle einzustellen.

Aus der JP 2001 239 861 A ist eine elektrisch betriebene Sitzgleitvorrichtung bekannt. Bei dieser elektrisch betriebenen Sitzgleitvorrichtung ist eine obere Schiene, mit der ein Sitz verbunden ist, innerhalb einer unteren Schiene angeordnet, die an einer Fahrzeugkarosserie befestigt ist. Eine Schraubenwelle ist drehbar in der oberen Schiene angeordnet. Eine solche Kombination der oberen Schiene, der unteren Schiene und der Schraubenwelle ist jeweils sowohl auf einer linken als auch auf einer rechten Seite parallel angeordnet. Die Schraubenwellen sind mit einem Elektromotor verbunden, der an einer der oberen Schienen angeordnet ist, so dass sie zeitgleich drehend angetrieben werden. Jeweils eine Mutter ist mit jeder Schraubenwelle verschraubt und ferner mit der unteren Schiene verbunden. Stoppelemente sind mit jeder Schraubenwelle in der Nähe der gegenüberliegenden Enden der Schraubenwelle verbunden, um die Bewegung der Mutter zu beschränken.

Die JP 2006 335 153 A offenbart eine elektrisch betriebene Sitzgleitvorrichtung, bei der der obere Abschnitt eines schienenseitigen Anschlags gegabelt ist, um zwei Anschlagplattenabschnitte zu bilden, die jeweils in Befestigungsöffnungen einer oberen Schiene eingepasst und in ihren Positionen fixiert sind.

Aus der DE 10 2006 000 193 A1 ist eine Sitzgleitvorrichtung bekannt, welche ein System mit einer schwimmenden Gewindespindel und einer feststehenden Mutter aufweist. Die Mutter ist an der unteren Schiene befestigt, während sich die Gewindespindel durch sie dreht, so dass sich die obere Struktur vorwärts und rückwärts bewegen kann. Eine auf die obere Schiene aufgebrachte Stoßlast wird direkt durch ein Getriebegehäuse auf die Gewindespindel übertragen.
Eine beispielhafte Sitzgleitvorrichtung ist aus der JP 2002 240 600 A bekannt.

### Aufgabe

Der Erfindung liegt die Aufgabe zu Grunde, einen Längseinsteller der eingangs genannten Art zu verbessern, insbesondere einen Längseinsteller, welcher eine reduzierte Anzahl von Öffnungen, insbesondere in der in Vertikalrichtung nach oben gerichteten Oberfläche, ermöglicht, sowie einen entsprechenden Fahrzeugsitz bereitzustellen.

### Lösung

Diese Aufgabe wird erfindungsgemäß gelöst durch einen Längseinsteller, insbesondere für einen Fahrzeugsitz, der Längseinsteller aufweisend mindestens ein Schienenpaar, welches aus einer ersten Sitzschiene und einer relativ zur ersten Sitzschiene in Längsrichtung verschiebbaren zweiten Sitzschiene gebildet ist, wobei die Sitzschienen unter Bildung eines Innenkanals einander wechselseitig umgreifen, wobei in dem Innenkanal eine mit der zweiten Sitzschiene gelagerte Spindelmutter und eine mit der Spindelmutter wirkverbundene Spindel angeordnet sind, wobei an einem vorderen Ende der ersten Sitzschiene ein mittels eines Motors antreibbares und mit der Spindel zusammenwirkendes Getriebe angeordnet ist, wobei die Spindel an einem vorderen Endabschnitt der Spindel in dem Getriebe und an einem hinteren Endabschnitt der Spindel in einem Drehlager der ersten Sitzschiene gelagert ist, wobei in Längsrichtung vor der Spindelmutter ein erster Querriegel in einem Schlitz der ersten Sitzschiene aufgenommen ist, wobei die Spindel kontaktfrei, insbesondere unter Bildung eines umlaufenden Spaltes, durch eine Öffnung des ersten Querriegels hindurchgeführt ist, wobei in Längsrichtung nach vorne beabstandet zum ersten Querriegel ein Absatz der Spindel angeordnet ist, wobei in Reaktion auf eine vorgegebene Krafteinwirkung, beispielsweise im Crashfall, insbesondere durch eine Verschiebung der ersten Sitzschiene, der erste Querriegel zwischen der ersten Sitzschiene und dem Absatz verklemmt, und hierdurch eine Kraft von der ersten Sitzschiene über den ersten Querriegel, den Absatz, die Spindel und die Spindelmutter zur zweiten Sitzschiene ableitbar ist, wobei das den hinteren Endabschnitt der Spindel lagernde Drehlager ein zweiter Querriegel ist, wobei der zweite Querriegel eine Lageröffnung zur Aufnahme einer Lagerbuchse aufweist, wobei an dem hinteren Endabschnitt der Spindel ein weiterer Absatz angeordnet ist, welcher mittels eines zylindrischen ersten Abschnitts in der Lagerbuchse drehbar gelagert ist und mit einem radial vergrößerten zweiten Abschnitt zum zweiten Querriegel beabstandet ist.

Dadurch, dass in Längsrichtung vor der Spindelmutter ein erster Querriegel in einem Schlitz der ersten Sitzschiene aufgenommen ist, ferner die Spindel kontaktfrei, insbesondere unter Bildung eines umlaufenden Spaltes, durch eine Öffnung des ersten Querriegels hindurchgeführt ist, und in Längsrichtung nach vorne beabstandet zum ersten Querriegel ein Absatz der Spindel angeordnet ist, lassen sich im Normalbetrieb störende metallische Geräusche durch unerwünschten Kontakt zwischen zwei sich relativ zueinander bewegenden Bauteilen vermeiden.

Dadurch, dass ferner in Reaktion auf eine vorgegebene Krafteinwirkung, beispielsweise im Crashfall, insbesondere durch eine Verschiebung der ersten Sitzschiene relativ zur Spindel, der erste Querriegel zwischen der ersten Sitzschiene und dem Absatz verklemmt und hierdurch eine Kraft von der ersten Sitzschiene über den ersten Querriegel, den Absatz, die Spindel und die Spindelmutter zur zweiten Sitzschiene ableitbar ist, wird es ermöglicht, dass eine Crashlast von einem auf dem Längseinsteller montierten Fahrzeugsitz sicher in eine Fahrzeugstruktur einleitbar ist. Bei einer Crashlast handelt es sich üblicherweise um eine, verglichen mit einer im Normalbetrieb auf den Längseinsteller wirkenden Kraft, im Crashfall um ein Vielfaches erhöhte Kraft.

Vorteilhafte Ausgestaltungen, welche einzeln oder in Kombination miteinander eingesetzt werden können, sind Gegenstand der Unteransprüche.

Der Absatz der Spindel kann vollständig innerhalb des Innenkanals rotierbar sein. Der Absatz der Spindel kann einteilig mit der Spindel gefertigt sein. Der Absatz der Spindel kann eine auf die Spindel aufgeschraubte Mutter sein. Die Mutter kann ein mit einem Außengewinde der Spindel zusammenwirkendes Innengewinde aufweisen. Die Mutter kann an der Spindel fixiert sein, insbesondere mittels eines Klebstoffes oder mittels eines Schweißverfahrens fixiert sein.

Die Lagerbuchse kann verdrehgesichert in der Lageröffnung fixiert sein. Die Lagerbuchse kann aus einem Kunststoff gefertigt sein.

Der weitere Absatz beziehungsweise die Stufenmutter kann ein Innengewinde aufweisen, welches mit dem Außengewinde der Spindel zusammenwirkt. Der weitere Absatz beziehungsweise die Stufenmutter kann auf die Spindel aufgeschraubt sein. Der weitere Absatz beziehungsweise die Stufenmutter kann an der Spindel fixiert sein, insbesondere mittels eines Klebstoffes oder mittels eines Schweißverfahrens fixiert sein.

In Reaktion auf eine vorgegebene Krafteinwirkung, insbesondere bei einem Heckaufprall, kann der zweite Querriegel zwischen der ersten Sitzschiene und dem weiteren Absatz beziehungsweise dem zweiten Abschnitt der Stufenmutter, insbesondere durch eine Verschiebung der ersten Sitzschiene relativ zur Spindel nach hinten, verklemmen und hierdurch eine Kraft von der ersten Sitzschiene über den zweiten Querriegel, die Stufenmutter, die Spindel und die Spindelmutter zur zweiten Sitzschiene ableitbar ist.

Der erste Querriegel und/oder der zweite Querriegel kann flach ausgestaltet sein. Der erste Querriegel und/oder der zweite Querriegel kann an einer in Vertikalrichtung nach oben gerichteten Anlagefläche, bevorzugt mittels Buckelschweißens, an der zweiten Sitzschiene befestigt sein. Der erste Querriegel und/oder der zweite Querriegel kann mit Spiel parallel zur Längsrichtung in einem zweiten Schlitz der ersten Sitzschiene aufgenommen sein. Der erste Querriegel kann unter Bildung eines Spaltes, insbesondere eines beidseitigen Spaltes, parallel zur Längsrichtung, in einem ersten Schlitz der ersten Sitzschiene aufgenommen sein. Der zweite Querriegel kann unter Bildung eines Spaltes, insbesondere eines beidseitigen Spaltes, parallel zur Längsrichtung, in einem zweiten Schlitz der ersten Sitzschiene aufgenommen sein.

Der erste Querriegel und/oder der zweite Querriegel kann Vorsprünge aufweisen, welche parallel zur Querrichtung seitlich aus dem jeweiligen Schlitz der zweiten Sitzschiene herausragen. Die aus der zweiten Sitzschiene herausragenden Vorsprünge des ersten und/oder zweiten Querriegels können von der ersten Sitzschiene beabstandet sein. Die im Belastungsfall der ersten Sitzschiene in Vertikalrichtung nach oben mit der zweiten Sitzschiene in Kontakt bringbaren Vorsprünge des ersten und/oder zweiten Querriegels können eine Geometrie aufweisen, mittels welcher die die Geometrie kontaktierenden Abschnitte der zweiten Sitzschiene an den Vorsprüngen vorbei leitbar sind. Hierbei werden die die Geometrie kontaktierenden Abschnitte der zweiten Sitzschiene nach außen gebogen und wirken einem sogenannten Peeling-Effekt, insbesondere einem Aufbiegen der zweiten Sitzscheine, entgegen. Des Weiteren wird durch das Vorbeileiten der besagten Abschnitte der zweiten Sitzschiene verhindert, dass die Schweißverbindung der Querriegel zur ersten Sitzschiene zu stark auf Zug belastet wird, wodurch ein Abreißen der Querriegel von der ersten Sitzschiene verhindert wird.

Die Aufgabe wird ferner erfindungsgemäß gelöst durch einen Fahrzeugsitz mit einem zuvor beschriebenen Längseinsteller.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen erfindungsgemäßen Fahrzeugsitz,
- Fig. 2:: einen erfindungsgemäßen Längseinsteller des Fahrzeugsitzes von Fig. 1,
- Fig. 3:: eine perspektivische Ansicht eines Schienenpaares des Längseinstellers von Fig. 2,
- Fig. 4:: eine Ansicht von vorne auf das Schienenpaar von Fig. 3,
- Fig. 5:: eine Ansicht von hinten auf das Schienenpaar von Fig. 3,
- Fig. 6:: eine Ansicht von unten auf eine erste Sitzschiene mit darin angeordneten Bauteilen,
- Fig. 7:: eine vergrößerte Ansicht eines vorderen Abschnitts der Darstellung von Fig. 6,
- Fig. 8:: eine vergrößerte Ansicht eines hinteren Abschnitts der Darstellung von Fig. 6,
- Fig. 9:: eine Darstellung eines Längsschnitts des Schienenpaares von Fig. 3,
- Fig. 10:: eine vergrößerte Ansicht eines vorderen Abschnitts der Darstellung von Fig. 9,
- Fig. 11:: eine vergrößerte Ansicht eines hinteren Abschnitts der Darstellung von Fig. 9,
- Fig. 12:: eine Darstellung eines Querschnitts des Schienenpaares von Fig. 3 durch einen ersten Querriegel, und
- Fig. 13:: eine Darstellung eines Querschnitts des Schienenpaares von Fig. 3 durch einen Absatz.

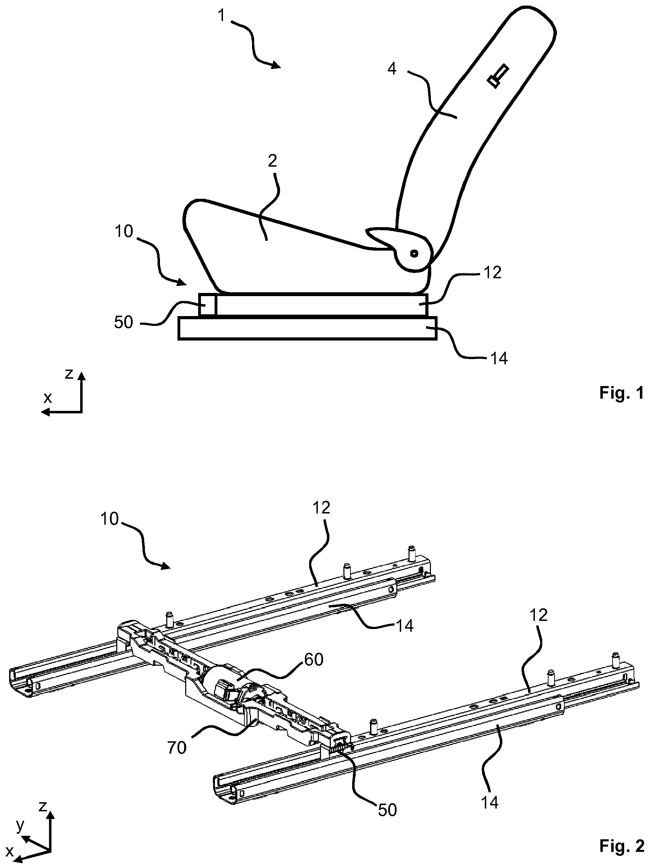

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Fig. 2 zeigt den erfindungsgemäßen Längseinsteller 10, des Fahrzeugsitzes 1 von Fig. 1. Der Längseinsteller 10 weist wenigstens ein Schienenpaar, vorliegend zwei Schienenpaare auf. Die Schienenpaare sind jeweils aus einer ersten Sitzschiene 12, insbesondere zur Verbindung mit einer Sitzstruktur des Fahrzeugsitzes 1, und einer zweiten Sitzschiene 14, insbesondere zur Verbindung mit einer Fahrzeugstruktur, gebildet. Die Sitzschienen 12, 14 des Schienenpaares sind in Längsrichtung x relativ zueinander verschiebbar und umgreifen unter Bildung eines Innenkanals 16 einander wechselseitig. In dem Innenkanal 16 ist eine an der zweiten Sitzschiene 14 gelagerte Spindelmutter 30 und eine mit der Spindelmutter 30 wirkverbundene Spindel 20 angeordnet. Die Spindel 20 erstreckt sich entlang einer Spindelachse A parallel zur Längsrichtung x. An einem vorderen Ende der ersten Sitzschiene 12 ist ein mittels eines Motors 60 antreibbares und mit der Spindel 20 zusammenwirkendes Getriebe 50 angeordnet. Der Motor 60 ist auf einem zwischen den beiden Getrieben 50 der jeweiligen Schienenpaare montierten Motorträger 70 gehalten und treibt mittels einer in Fig. 2 nicht dargestellten Welle die beiden Getriebe 50 an.

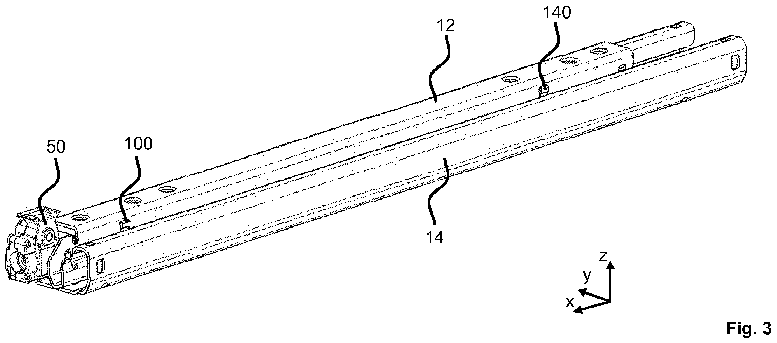

Fig. 3 zeigt eines der Schienenpaare des Längseinstellers 10 von Fig. 2.

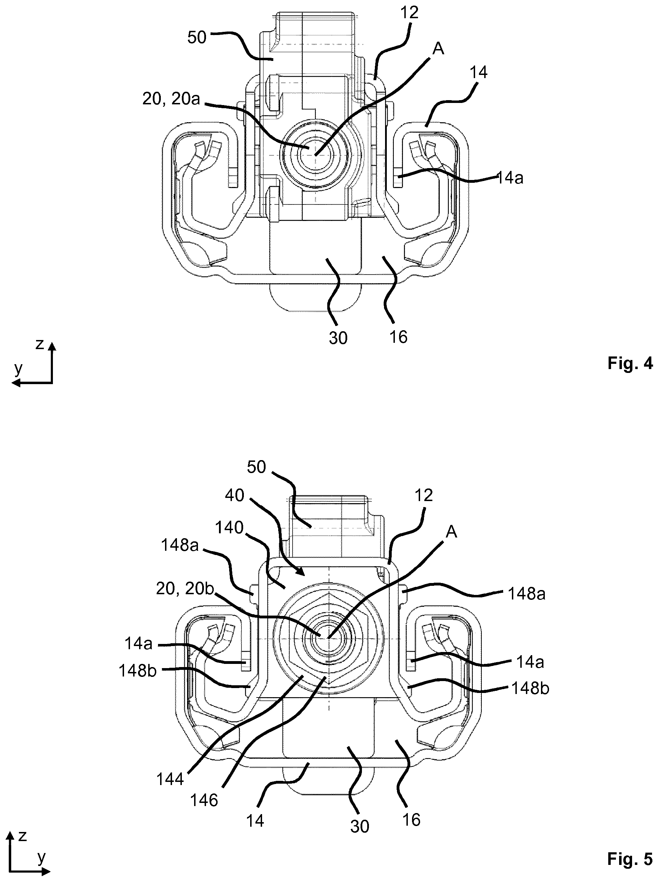

Fig. 4 zeigt eine Ansicht von vorne auf das Schienenpaar von Fig. 3. Das Getriebe 50 lagert einen vorderen Endabschnitt 20a der Spindel 20.

Fig. 5 zeigt eine Ansicht von hinten auf das Schienenpaar von Fig. 3. Ein hinterer Endabschnitt 20b der Spindel 20 ist in einem Drehlager 40 der ersten Sitzschiene 12 gelagert.

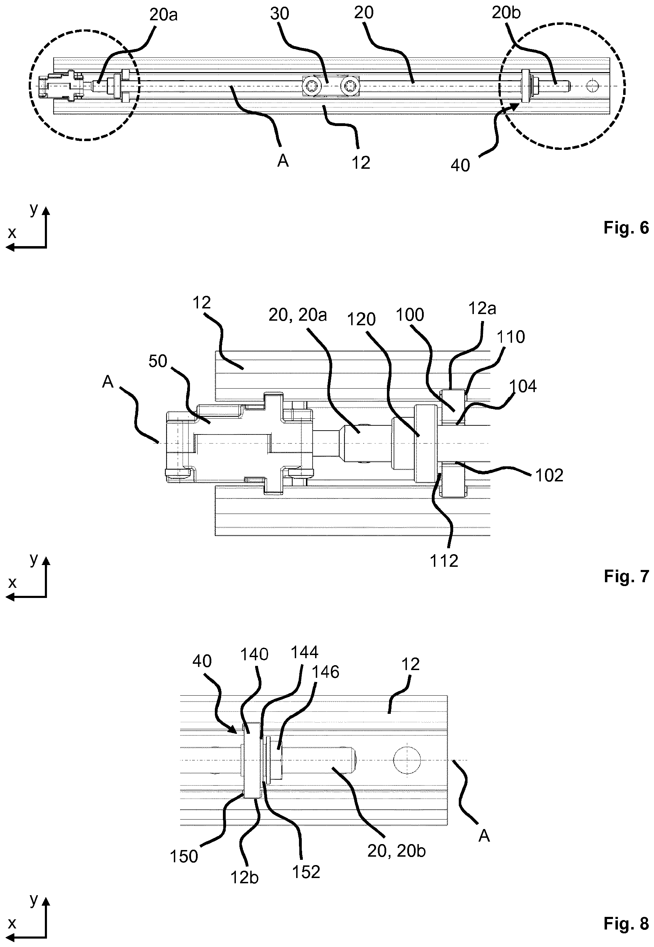

Fig. 6 zeigt eine Ansicht von unten auf die erste Sitzschiene 12 mit darin angeordneten Bauteilen. In den Figuren 7 und 8 ist jeweils eine vergrößerte Ansicht eines vorderen beziehungsweise hinteren Abschnitts der ersten Sitzschiene 12 von Fig. 6 gezeigt. Die Spindelmutter 30 ist in vorliegend dargestelltem Zustand mittig entlang der Länge der Spindel 20 angeordnet. Durch ein Drehen der Spindel 20 um die Spindelachse A schraubt sich die Spindelmutter 30 in Abhängigkeit der Drehrichtung entlang eines Außengewindes der Spindel 20 in oder entgegen der Längsrichtung x.

In Längsrichtung x ist vor der Spindelmutter 30 ein erster Querriegel 100 in einem ersten Schlitz 12a der ersten Sitzschiene 12 aufgenommen. Der erste Querriegel 100 weist eine Öffnung 102 auf. Die Spindel 20 ist kontaktfrei, insbesondere unter Bildung eines umlaufenden Spaltes 104, durch die Öffnung 102 des ersten Querriegels 100 hindurchgeführt. In Längsrichtung x nach vorne und beabstandet zum ersten Querriegel 100 ist ein Absatz 120 der Spindel 20 angeordnet. Der Absatz 120 ist gemäß dem dargestellten bevorzugten Ausführungsbeispiel eine auf das Außengewinde der Spindel 20 aufschraubbare Mutter 120, welche ein mit dem Außengewinde der Spindel 20 kooperierendes Innengewinde aufweist. Nachfolgend wird der Absatz 120 allgemein anhand der dargestellten Mutter 120 beschrieben. In montiertem Zustand ist die Mutter 120 bevorzugt drehfest mit der Spindel 20 verbunden, insbesondere verklebt oder verschweißt. Die auf der Spindel 20 befestigte Mutter 120 ist vollständig innerhalb des Innenkanals 16 rotierbar. Hierdruch sind um die Mutter 120 herum keinerlei Ausnehmungen oder Öffnungen in der ersten Sitzschiene 12 notwendig und die Sitzschiene 12 ist weniger durch Ausnehmungen oder Öffnungen in ihrer Stabilität beeinträchtigt. Die Mutter 120 weist eine kreiszylindrische Außenkontur auf.

Durch Überschreiten einer vorgegebenen Krafteinwirkung, wie sie beispielsweise bei einem Frontcrash auftritt, verschiebt sich die erste Sitzschiene 12 relativ zur Spindel 20 derart nach vorne, dass die erste Sitzschiene 12 zunächst den an ihr fixierten ersten Querriegel 100 in ihrer Bewegung in Längsrichtung x mitführt, bis der Spalt 112 zwischen dem ersten Querriegel 100 und der Mutter 120 durch einen Kontakt zwischen dem ersten Querriegel 100 und der Mutter 120 geschlossen ist. Anschließend erfolgt eine Verformung des Querriegels 100 in seinem Verbindungsbereich zur ersten Sitzscheine 12, derart, dass sich der Spalt 110 zwischen dem ersten Querriegel 100 und der hinteren Kante des ersten Schlitzes 12a schließt, indem die in Längsrichtung x betrachtet hintere Kante des ersten Schlitzes 12a mit dem ersten Querriegel 100 in Anlage gelangt. Auf diese Weise verklemmt der erste Querriegel 100 in Reaktion auf eine vorgegebene Krafteinwirkung, beispielsweise im Crashfall, insbesondere durch eine aufgrund einer Deformation erfolgende Verschiebung der ersten Sitzschiene 12 relativ zur Spindel 20, zwischen der ersten Sitzschiene 12 und der Mutter 120. Hierdurch ist eine Kraft von der ersten Sitzschiene 12 über den ersten Querriegel 100, den Absatz 120, die Spindel 20 und die Spindelmutter 30 zur zweiten Sitzschiene 14 ableitbar.

Das den hinteren Endabschnitt 20b der Spindel 20 lagernde Drehlager 40 ist bevorzugt ein zweiter Querriegel 140. Der zweite Querriegel 140 weist eine Lageröffnung 142 zur Aufnahme einer Lagerbuchse 144 auf. Die Lagerbuchse 144 ist bevozugt verdrehgesichert in der Lageröffnung 142 fixiert. Die Lagerbuchse 144 ist bevorzugt aus einem Kunststoff gefertigt. An dem hinteren Endabschnitt 20b der Spindel 20 ist ein weiterer Absatz 146 angeordnet. Der weitere Absatz 146 ist gemäß dem dargestellten bevorzugten Ausführungsbeispiel eine auf das Außengewinde der Spindel 20 aufgeschraubte Stufenmutter 146, welche ein mit dem Außengewinde der Spindel 20 kooperierendes Innengewinde aufweist. Nachfolgend wird der weitere Absatz 146 allgemein anhand der dargestellten Stufenmutter 146 beschrieben. Die Stufenmutter 146 ist auf die Spindel 20 aufgeschraubt und gegen Verdrehen gesichert. Die Stufenmutter 146 ist mittels eines zylindrischen ersten Abschnitts 146a drehbar in der Lagerbuchse 144 gelagert. Die Stufenmutter 146 weist ferner einen gegenüber dem ersten Abschnitt 146a radial vergrößerten zweiten Abschnitt 146b auf, welcher zum zweiten Querriegel 140, insbesondere unter Bildung eines Spaltes 152, beabstandet ist.

Durch Überschreiten einer vorgegebenen Krafteinwirkung, wie sie beispielsweise bei einem Heckaufprall auftritt, verschiebt sich die erste Sitzschiene 12 relativ zur Spindel 20, derart nach hinten, dass die erste Sitzschiene 12 zunächst den an ihr fixierten zweiten Querriegel 140 in ihrer Bewegung entgegen der Längsrichtung x mitführt, bis der Spalt 152 zwischen dem zweiten Querriegel 140 beziehungsweise der Lagerbuchse 144 und dem zweiten Abschnitt 146b der Stufenmutter 146 durch einen Kontakt zwischen dem zweiten Querriegel 140 beziehungsweise der Lagerbuchse 144 und des zweiten Abschnitts 146b der Stufenmutter 146 geschlossen ist. Anschließend erfolgt eine Verformung des zweiten Querriegels 140 in seinem Verbindungsbereich zur ersten Sitzscheine 12, derart, dass sich der Spalt 150 zwischen dem zweiten Querriegel 140 und der vorderen Kante des zweiten Schlitzes 12b schließt, indem die in Längsrichtung x betrachtet vordere Kante des zweiten Schlitzes 12b mit dem zweiten Querriegel 140 in Anlage gelangt. Auf diese Weise ist in Reaktion auf eine vorgegebene Krafteinwirkung, insbesondere bei einem Heckaufprall, der zweite Querriegel 140 zwischen der ersten Sitzschiene 12 und dem zweiten Abschnitt 146b der Stufenmutter 146, insbesondere durch eine aufgrund einer Deformation erfolgende Verschiebung der ersten Sitzschiene 12 relativ zur Spindel 20 nach hinten, verklemmt und hierdurch eine Kraft von der ersten Sitzschiene 12 über den zweiten Querriegel 140, die Stufenmutter 146, die Spindel 20 und die Spindelmutter 30 zur zweiten Sitzschiene 14 ableitbar ist.

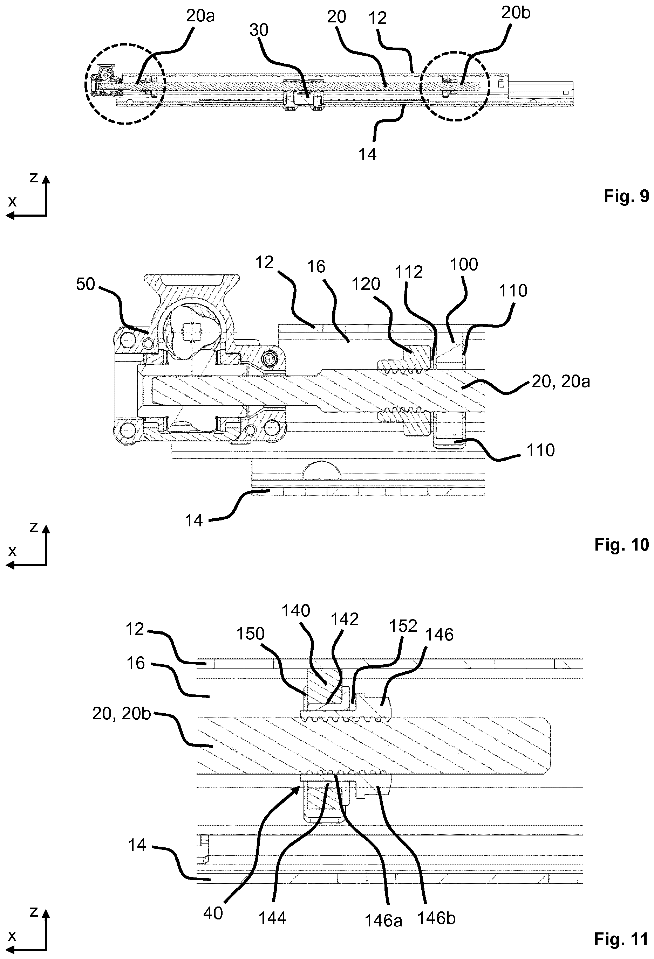

Fig. 9 zeigt einen Längsschnitt des Schienenpaares von Fig. 3. In den Figuren 10 und 11 ist jeweils eine vergrößerte Ansicht eines vorderen beziehungsweise hinteren Abschnitts des Schienenpaares im Bereich eines vorderen Endabschnitts 20a beziehungsweise eines hinteren Endabschnitts 20b der Spindel 20 von Fig. 9 gezeigt. Der erste und/oder zweite Querriegel 100, 140 ist bevorzugt mit Spiel parallel zur Längsrichtung x in dem jeweiligen ersten oder zweiten Schlitz 12a, 12b der ersten Sitzschiene 12 aufgenommen. Entsprechend ist zwischen dem ersten Querriegel 100 und den Kanten des ersten Schlitzes 12a der ersten Sitzschiene 12 bevorzugt ein Spalt 110 ausgebildet. Ferner ist zwischen dem zweiten Querriegel 140 und den Kanten des zweiten Schlitzes 12b der ersten Sitzschiene 12 bevorzugt ein Spalt 150 ausgebildet.

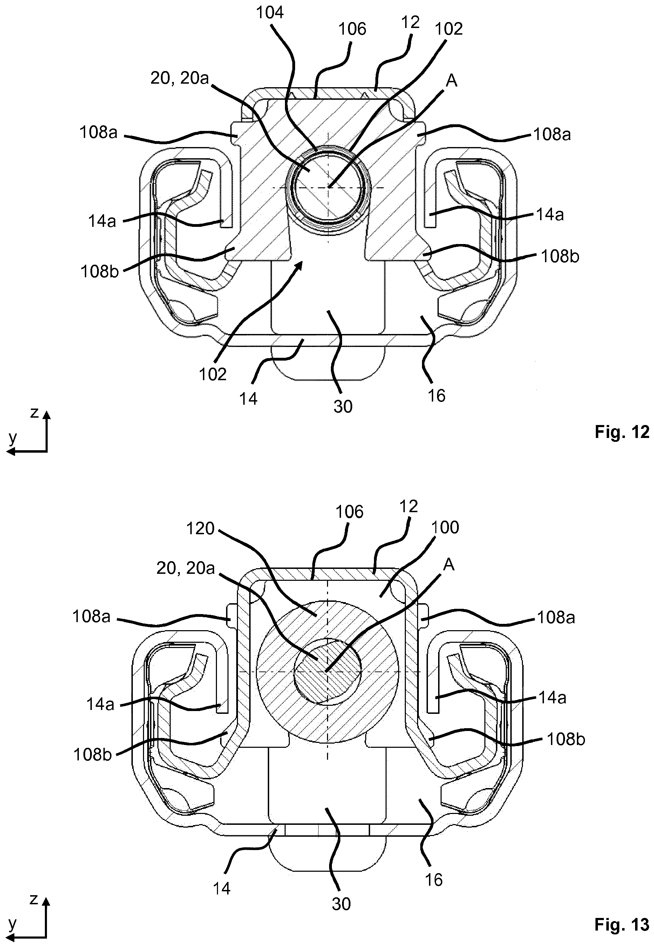

Fig. 12 zeigt eine Darstellung eines Querschnitts des Schienenpaares von Fig. 3 durch den ersten Querriegel 100. Fig. 13 zeigt eine Darstellung eines Querschnitts des Schienenpaares von Fig. 3 durch den Absatz 120.

Der erste Querriegel 100 ist vorliegend an einer in Vertikalrichtung z nach oben gerichteten Anlagefläche 106, bevorzugt mittels Buckelschweißens, an der ersten Sitzschiene 12 befestigt. Der zweite Querriegel 140 kann auf die gleiche Weise an der ersten Sitzschiene 12 befestigt sein. Der erste Querriegel 100 weist eine nach unten geöffnete Öffnung 102 auf. Die Öffnung 102 weist im Bereich einer unteren Kante des ersten Querriegels 100 eine Breite auf, die ein Einführen der Spindel 20 begünstigt. Im Bereich der Spindelachse A der Spindel 20 weist die Öffnung 102 eine größeren Durchmesser auf, als im Bereich der unteren Kante des Querriegels 100. Beispielhafte Größenangaben sind beispielsweise, dass die Spindel 20 einen Durchmesser von 8 mm, die Öffnung 102 im Bereich der Kante des Querriegels 100 eine Breite von 9 mm und die Öffnung 102 im Bereich der Spindelachse A der montierten Spindel 20 einen Durchmesser von 10 mm aufweisen. Hierbei wird beispielsweise um die Spindel 20 mit dem Durchmesser von 8 mm herum einen gleichmäßig umlaufenden Spalt 104 mit einer Spaltbreite von 1 mm bereitgestellt. Die Querriegel 100, 140 weisen jeweils zwei obere Vorsprünge 108a, 148a und zwei unter Vorspünge 108b, 148b auf, welche parallel zur Querrichtung y seitlich aus entsprechenden Schlitzen 12a, 12b der ersten Sitzschiene 12 herausragen. Die aus dem jeweiligen Schlitz 12a, 12b der ersten Sitzschiene 12 herausragenden Vorsprünge 108a, 108b, 148a, 148b der Querriegel 100, 140 sind wenigstens während des Normalbetriebs bevorzugt von der zweiten Sitzschiene 14 beabstandet.

Im Belastungsfall der ersten Sitzschiene 12 in Vertikalrichtung z nach oben kann es jedoch zu einem Kontakt der unteren Vorsprünge 108b, 148b mit der zweiten Sitzschiene 14, insbesondere mit einem die erste Sitzschiene 12 hintergreifenden Abschnitt 14a der zweiten Sitzschiene 14, kommen. Um hierbei ein Verhaken der Querriegel 100, 140 mit dem Abschnitt 14a der zweiten Sitzschiene 14 zu vermeiden, weisen die unteren Vorsprünge 108b, 148b der Querriegel 100, 140 eine Geometrie auf, mittels welcher die Abschnitte 14a der zweiten Sitzschiene 14 an den Vorsprüngen 108b, 148b vorbei leitbar sind.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten beziehungsweise Einrichtungen ausführen.

### Bezugszeichenliste

- 1: Fahrzeugsitz
- 2: Sitzteil
- 4: Lehne
- 10: Längseinsteller
- 12: erste Sitzschiene
- 12a: erster Schlitz
- 12b: zweiter Schlitz
- 14: zweite Sitzschiene
- 14a: Abschnitt
- 16: Innenkanal
- 20: Spindel
- 20a: vorderer Endabschnitt (der Spindel 20)
- 20b: hinterer Endabschnitt (der Spindel 20)
- 30: Spindelmutter
- 40: Drehlager
- 50: Getriebe
- 60: Motor
- 70: Motorträger
- 100: erster Querriegel
- 102: Öffnung
- 104: Spalt (radial zur Spindel 20)
- 106: Anlagefläche
- 108a: oberer Vorsprung
- 108b: unterer Vorsprung
- 110: Spalt (zum ersten Schlitz 12a)
- 112: Spalt (zum Absatz 120)
- 120: Absatz, Mutter
- 140: zweiter Querriegel
- 142: Lageröffnung
- 144: Lagerbuchse
- 146: weiterer Absatz, Stufenmutter
- 146a: erster Abschnitt (der Stufenmutter 146)
- 146b: zweiter Abschnitt (der Stufenmutter 146)
- 148a: oberer Vorsprung
- 148b: unterer Vorsprung
- 150: Spalt (zum zweiten Schlitz 12b)
- 152: Spalt (zum zweiten Abschnitt 146b der Stufenmutter 146)
- A: Spindelachse (der Spindel 20)
- x: Längsrichtung
- y: Querrichtung
- z: Vertikalrichtung

## Patentansprüche

1. Längseinsteller (10), insbesondere für einen Fahrzeugsitz (1), der Längseinsteller (10) aufweisend mindestens ein Schienenpaar, welches aus einer ersten Sitzschiene (12) und einer relativ zur ersten Sitzschiene (12) in Längsrichtung (x) verschiebbaren zweiten Sitzschiene (14) gebildet ist, wobei die Sitzschienen (12, 14) unter Bildung eines Innenkanals (16) einander wechselseitig umgreifen, wobei in dem Innenkanal (16) eine mit der zweiten Sitzschiene (14) gelagerte Spindelmutter (30) und eine mit der Spindelmutter (30) wirkverbundene Spindel (20) angeordnet sind, wobei an einem vorderen Ende der ersten Sitzschiene (12) ein mittels eines Motors (60) antreibbares und mit der Spindel (20) zusammenwirkendes Getriebe (50) angeordnet ist, wobei die Spindel (20) an einem vorderen Endabschnitt (20a) der Spindel (20) in dem Getriebe (50) und an einem hinteren Endabschnitt (20b) der Spindel (20) in einem Drehlager (40) der ersten Sitzschiene (12) gelagert ist, wobei in Längsrichtung (x) vor der Spindelmutter (30) ein erster Querriegel (100) in einem ersten Schlitz (12a) der ersten Sitzschiene (12) aufgenommen ist, wobei die Spindel (20) kontaktfrei durch eine Öffnung (102) des ersten Querriegels (100) hindurchgeführt ist, wobei in Längsrichtung (x) nach vorne beabstandet zum ersten Querriegel (100) ein Absatz (120) der Spindel (20) angeordnet ist, wobei in Reaktion auf eine vorgegebene Krafteinwirkung, beispielsweise im Crashfall der erste Querriegel (100) zwischen der ersten Sitzschiene (12) und dem Absatz (120) verklemmt, und hierdurch eine Kraft von der ersten Sitzschiene (12) über den ersten Querriegel (100), den Absatz (120), die Spindel (20) und die Spindelmutter (30) zur zweiten Sitzschiene (14) ableitbar ist,
**dadurch gekennzeichnet, dass**
das den hinteren Endabschnitt (20b) der Spindel (20) lagernde Drehlager (40) ein zweiter Querriegel (140) ist, wobei der zweite Querriegel (140) eine Lageröffnung (142) zur Aufnahme einer Lagerbuchse (144) aufweist, wobei an dem hinteren Endabschnitt (20b) der Spindel (20) ein weiterer Absatz (146) angeordnet ist, welcher mittels eines zylindrischen ersten Abschnitts (146a) in der Lagerbuchse (144) drehbar gelagert ist und mit einem radial vergrößerten zweiten Abschnitt (146b) zum zweiten Querriegel (140) beabstandet ist.

2. Längseinsteller (10) gemäß Anspruch 1, wobei der Absatz (120) der Spindel (20) vollständig innerhalb des Innenkanals (16) rotierbar ist.

3. Längseinsteller (10) gemäß einem der Ansprüche 1 oder 2, wobei der Absatz (120) der Spindel (20) eine auf die Spindel (20) aufgeschraubte Mutter (120) ist.

4. Längseinsteller (10) gemäß einem der Ansprüche 1 bis 3, wobei die Lagerbuchse (144) verdrehgesichert in der Lageröffnung (142) fixiert ist.

5. Längseinsteller (10) gemäß einem der Ansprüche 1 bis 4, wobei die Lagerbuchse (144) aus einem Kunststoff gefertigt ist.

6. Längseinsteller (10) gemäß einem der Ansprüche 1 bis 5, wobei in Reaktion auf eine vorgegebene Krafteinwirkung der zweite Querriegel (140) zwischen der ersten Sitzschiene (12) und dem zweiten Abschnitt (146b) des weiteren Absatzes (146) verklemmt, und hierdurch eine Kraft von der ersten Sitzschiene (12) über den zweiten Querriegel (140), den weiteren Absatz (146), die Spindel (20) und die Spindelmutter (30) zur zweiten Sitzschiene (14) ableitbar ist.

7. Längseinsteller (10) gemäß Anspruch 6, wobei in Reaktion auf eine vorgegebene Krafteinwirkung der zweite Querriegel (140) zwischen der ersten Sitzschiene (12) und dem zweiten Abschnitt (146b) des weiteren Absatzes (146) durch eine Verschiebung der ersten Sitzschiene (12) relativ zur Spindel (20) nach hinten verklemmt.

8. Längseinsteller (10) gemäß einem der Ansprüche 1 bis 7, wobei wenigstens einer der Querriegel (100, 140) flach ausgestaltet ist.

9. Längseinsteller (10) gemäß einem der Ansprüche 1 bis 8, wobei wenigstens einer der Querriegel (100, 140) an einer in Vertikalrichtung (z) nach oben gerichteten Anlagefläche, bevorzugt mittels Buckelschweißens, an der ersten Sitzschiene (12) befestigt ist.

10. Längseinsteller (10) gemäß einem der Ansprüche 1 bis 9, wobei wenigstens einer der Querriegel (100, 140) mit Spiel parallel zur Längsrichtung (x) in dem jeweiligen Schlitz (12a, 12b) der ersten Sitzschiene (12) aufgenommen ist.

11. Längseinsteller (10) gemäß einem der Ansprüche 1 bis 10, wobei wenigstens einer der Querriegel (100, 140) Vorsprünge (108a, 108b, 148a, 148b) aufweist, welche parallel zur Querrichtung (y) seitlich aus dem jeweiligen Schlitz (12a, 12b) der ersten Sitzschiene (12) herausragen.

12. Längseinsteller (10) gemäß Anspruch 11, wobei die aus dem jeweiligen Schlitz (12a, 12b) der ersten Sitzschiene (12) herausragenden Vorsprünge (108a, 108b, 148a, 148b) der Querriegel (100, 140) sind wenigstens während des Normalbetriebs von der zweiten Sitzschiene (14) beabstandet sind.

13. Fahrzeugsitz (1) mit einem Längseinsteller (10) gemäß einem der vorherstehenden Ansprüche.

## Claims

1. Longitudinal adjuster (10), in particular for a vehicle seat, the longitudinal adjuster (10) having at least one pair of rails which is comprised of a first seat rail (12) and a second seat rail (14) which can be displaced in the longitudinal direction (x) relative to the first seat rail (12), the seat rails (12, 14) mutually embracing one another thereby forming an inner channel, a spindle nut (30) mounted with the second seat rail (14) and a spindle (20) operatively connected to the spindle nut (30) being arranged in the inner channel (16), wherein a gear (50) which can be driven by means of a motor (60) and interacts with the spindle (20) is arranged at a front end of the first seat rail (12), wherein the spindle (20) is mounted at a front end portion (20a) of the spindle (20) in the gear (50) and at a rear end portion (20b) of the spindle (20) in a pivot bearing (40) of the first seat rail (12), wherein a first transverse bolt (100) is received in a first slot (12a) of the first seat rail (12) in front of the spindle nut (30) in the longitudinal direction (x), wherein the spindle (20) is guided without contact through an opening (102) of the first transverse bolt (100), wherein a shoulder (120) of the spindle (20) is arranged at a distance forwardly from the first transverse bolt (100) in the longitudinal direction (x), wherein in response to a predetermined force action, for example in the event of a crash, the first transverse bar (100) jams between the first seat rail (12) and the shoulder (120), and as a result a force can be diverted from the first seat rail (12) via the first transverse bar (100), the shoulder (120), the spindle (20) and the spindle nut (30) to the second seat rail (14), **characterized in that** the pivot bearing (40) supporting the rear end portion (20b) of the spindle (20) is a second crossbar (140), the second crossbar (140) having a bearing opening (142) for receiving a bearing bushing (144), wherein a further shoulder (146) is arranged at the rear end portion (20b) of the spindle (20), which shoulder is rotatably mounted in the bearing bush (144) by means of a cylindrical first portion (146a) and is spaced from the second transverse bolt (140) by a radially enlarged second portion (146b).

2. Longitudinal adjuster (10) according to claim 1, wherein the shoulder (120) of the spindle (20) is completely rotatable within the inner channel (16).

3. Longitudinal adjuster (10) according to any one of claims 1 or 2, wherein the shoulder (120) of the spindle (20) is a nut (120) threaded onto the spindle (20).

4. Longitudinal adjuster (10) according to any one of claims 1 to 3, wherein the bearing bushing (144) is fixed in the bearing opening (142) in a manner secured against rotation.

5. Longitudinal adjuster (10) according to any one of claims 1 to 4, wherein the bearing bushing (144) is made of a plastic.

6. Longitudinal adjuster (10) according to any one of claims 1 to 5, wherein in response to a predetermined application of force, the second transverse latch (140) is clamped between the first seat rail (12) and the second portion (146b) of the further shoulder (146), and thereby a force is divertible from the first seat rail (12) via the second transverse latch (140), the further shoulder (146), the spindle (20) and the spindle nut (30) to the second seat rail (14).

7. Longitudinal adjuster (10) according to claim 6, wherein, in response to a predetermined force application, the second transverse latch (140) jams between the first seat rail (12) and the second portion (146b) of the further shoulder (146) by displacing the first seat rail (12) rearwardly relative to the spindle (20).

8. Longitudinal adjuster (10) according to any one of claims 1 to 7, wherein at least one of the crossbars (100, 140) is of flat design.

9. Longitudinal adjuster (10) according to any one of claims 1 to 8, wherein at least one of the transverse bars (100, 140) is fixed to the first seat rail (12) at an abutment surface directed upwardly in the vertical direction (z), preferably by means of projection welding

10. Longitudinal adjuster (10) according to any one of claims 1 to 9, wherein at least one of the transverse latches (100, 140) is received with clearance parallel to the longitudinal direction (x) in the respective slot (12a, 12b) of the first seat rail (12).

11. Longitudinal adjuster (10) according to any one of claims 1 to 10, with at least one of the transverse bars (100, 140) comprising protrusions (108a, 108b, 148a, 148b) which protrude sideways from the respective slot (12a, 12b) of the first seat rail (12) parallel to the transverse direction (y).

12. Longitudinal adjuster (10) according to claim 11, wherein the protrusions (108a, 108b, 148a, 148b) of the transverse bolts (100, 140) which protrude from the respective slot (12a, 12b) of the first seat rail (12) are spaced from the second seat rail (14) at least during normal operation

13. Vehicle seat (1) with a longitudinal adjuster (10) according to one of the preceding claims.

## Revendications

1. Dispositif de réglage longitudinal (10), en particulier pour un siège de véhicule, le dispositif de réglage longitudinal (10) présentant au moins une paire de rails qui est formée d'un premier rail de siège (12) et d'un deuxième rail de siège (14) qui peut être déplacé dans la direction longitudinale (x) par rapport au premier rail de siège (12), dans lequel les rails de siège (12, 14) s'embrassent mutuellement en formant un canal intérieur, dans lequel un écrou de broche (30) monté avec le second rail de siège (14) et une broche (20) reliée de manière opérationnelle à l'écrou de broche (30) sont disposés dans le canal intérieur (16), dans lequel un engrenage (50) pouvant être entraîné au moyen d'un moteur (60) et coopérant avec la broche (20) est disposé à une extrémité avant du premier rail de siège (12), dans lequel la broche (20) est montée à une partie d'extrémité avant (20a) de la broche (20) dans l'engrenage (50) et à une partie d'extrémité arrière (20b) de la broche (20) dans un palier de pivotement (40) du premier rail de siège (12), dans lequel un premier boulon transversal (100) est reçu dans une première fente (12a) du premier rail de siège (12) devant l'écrou de broche (30) dans la direction longitudinale (x), dans lequel la broche (20) est guidée sans contact à travers une ouverture (102) du premier boulon transversal (100), dans lequel un épaulement (120) de la broche (20) est disposé à distance du premier boulon transversal (100) vers l'avant dans la direction longitudinale (x), dans lequel en réponse à une action de force prédéterminée, par exemple en cas de collision, le premier boulon transversal (100) est guidé à travers une ouverture (102) du premier boulon transversal (100), par exemple en cas de collision, la première barre transversale (100) se bloque entre le premier rail de siège (12) et l'épaulement (120), et en conséquence une force peut être déviée du premier rail de siège (12) via la première barre transversale (100), l'épaulement (120), la broche (20) et l'écrou de broche (30) vers le second rail de siège (14), **caractérisé en ce que** le palier de pivotement (40) supportant la partie d'extrémité arrière (20b) de la broche (20) est une seconde barre transversale (140), la seconde barre transversale (140) ayant une ouverture de palier (142) pour recevoir un coussinet (144), dans lequel un autre épaulement (146) est disposé au niveau de la partie d'extrémité arrière (20b) de la broche (20), lequel épaulement est monté de manière rotative dans le coussinet (144) au moyen d'une première partie cylindrique (146a) et est espacé du second boulon transversal (140) par une seconde partie élargie radialement (146b).

2. Dispositif de réglage longitudinal (10) selon la revendication 1, dans lequel l'épaulement (120) de la broche (20) est complètement rotatif à l'intérieur du canal intérieur (16).

3. Dispositif de réglage longitudinal (10) selon l'une quelconque des revendications 1 ou 2, dans lequel l'épaulement (120) de la broche (20) est un écrou (120) vissé sur la broche (20).

4. Dispositif de réglage longitudinal (10) selon l'une quelconque des revendications 1 à 3, dans lequel le coussinet (144) est fixé dans l'ouverture de palier (142) de manière solidaire en rotation.

5. Dispositif de réglage longitudinal (10) selon l'une quelconque des revendications 1 à 4, dans lequel le coussinet (144) est réalisé en matière plastique.

6. Dispositif de réglage longitudinal (10) selon l'une quelconque des revendications 1 à 5, dans lequel, en réponse à une application prédéterminée de force, la deuxième barre transversale (140) est bloquée entre le premier rail de siège (12) et la deuxième partie (146b) de l'autre épaulement (146), et ainsi une force peut être déviée du premier rail de siège (12) via la deuxième barre transversale (140), l'autre épaulement (146), la broche (20) et l'écrou de broche (30) vers le deuxième rail de siège (14).

7. Dispositif de réglage longitudinal (10) selon la revendication 6, dans lequel, en réponse à une application prédéterminée de force, le second verrou transversal (140) entre le premier rail de siège (12) et la seconde partie (146b) de l'autre épaulement (146) est bloqué par un déplacement du premier rail de siège (12) par rapport à la broche vers l'arrière.

8. Dispositif de réglage longitudinal (10) selon l'une quelconque des revendications 1 à 7, dans lequel au moins une des barres transversales (100, 140) est de conception plate.

9. Dispositif de réglage longitudinal (10) selon l'une quelconque des revendications 1 à 8, dans lequel au moins une des barres transversales (100, 140) est fixée au premier rail de siège (12) au niveau d'une surface de butée orientée vers le haut dans la direction verticale (z), de préférence au moyen d'un soudage par projection.

10. Dispositif de réglage longitudinal (10) selon l'une quelconque des revendications 1 à 9, dans lequel au moins une des barres transversales (100, 140) est reçu avec un jeu parallèle à ladite direction longitudinale (x) dans la fente respective (12a, 12b) du premier rail de siège (12).

11. Dispositif de réglage longitudinal (10) selon l'une quelconque des revendications 1 à 10, dans lequel au moins une des barres transversales (100, 140) présente des saillies (108a, 108b, 148a, 148b). qui font saillie latéralement depuis la fente respective (12a, 12b) du premier rail de siège (12) parallèlement à la direction transversale (y).

12. Dispositif de réglage longitudinal (10) selon la revendication 11, dans lequel les saillies (108a, 108b, 148a, 148b) des barres transversales (100, 140) faisant saillie de la fente respective (12a, 12b) du premier rail de siège (12) sont espacées du second rail de siège (14) au moins pendant le fonctionnement normal.

13. Siège de véhicule (1) avec un dispositif de réglage longitudinal (10) selon l'une quelconque des revendications précédentes.
